Europäisches Patentamt

European Patent Office

Office européen des brevets

(19)

(11) Publication number: **0 293 612**
**A2**

## (12) EUROPEAN PATENT APPLICATION

(21) Application number: 88107031.2

(22) Date of filing: 02.05.88

(51) Int. Cl.⁴: **B29C 67/14 , B32B 27/00 ,**
**//B29L31:30**

(30) Priority: 05.05.87 IT 6738587

(43) Date of publication of application:
07.12.88 Bulletin 88/49

(84) Designated Contracting States:
**DE ES FR GB SE**

(71) Applicant: **FERRARI ENGINEERING S.p.a.**
**Strada Scaglia Est 15 Direzionale Modena 2**
**I-41100 Modena(IT)**

Applicant: **ALUSUISSE ITALIA S.p.A.**
**Via Vittor Pisani, 31**
**I-20124 Milano(IT)**

Applicant: **MOLDING SYSTEMS S.p.A.**
**Via Casilina Km. 57, 5**
**I-03018 Castellaccio di Paliano(IT)**

(72) Inventor: **Calabrese, Adamo**
**Via G. Leopardi, 241/B**
**I-20099 Sesto S. Giovanni(IT)**
Inventor: **Sabbatini, Silverio**
**Piazza Italia, 21**
**I-00034 Colleferro(IT)**
Inventor: **Mazzola, Massimo**
**Via E. Toti, 4**
**I-00034 Colleferro(IT)**
Inventor: **Scaglietti, Oscar**
**Via Tagliamento, 6**
**I-41051 Montale di Castelnuovo Rangone(IT)**

(74) Representative: **Prato, Roberto et al**
**c/o Ingg. Cario e Mario Torta Via Viotti 9**
**I-10121 Torino(IT)**

(54) Composite load-bearing structural element, particularly for vehicle bodies, and relative manufacturing process.

(57) A composite structural element for vehicle bodies, consisting of a panel (1) of any shape formed by combining into a monolithic whole a matrix (2) formed from unsaturated polyester resin foam, and a three-dimensional armature (3) formed from a first and second layer (4, 5) of vegetable, mineral or synthetic fibres arranged beneath respective surfaces (9, 10) defining the aforementioned panel, and an intermediate spacer element (8) inserted between and separating the aforementioned fibre layers (4, 5) and formed from a permeable, flexible mattress having a high void percentage.

Fig.1

# COMPOSITE LOAD-BEARING STRUCTURAL ELEMENT, PARTICULARLY FOR VEHICLE BODIES, AND RELATIVE MANUFACTURING PROCESS

The present invention relates to a composite load-bearing structural element, particularly suitable for vehicle bodies or any application requiring relatively large, self-supporting panels with a high strength/weight ratio, e.g. as in the building industry. The present invention also relates to a process enabling manufacture of such a load-bearing element on an industrial scale.

Numerous applications, particularly in the car and industrial vehicle industry, are known to require substitute materials for sheet steel and aluminium, which, in addition to presenting good mechanical strength, are also lightweight per unit of volume. The present state of the art substantially provides for the following types of material catering to this requirement:

A) Hot-formed thermoplastic resin panels, usually reinforced with glass or carbon fibre.

B) So-called "sandwich" panels consisting of two layers or "facings" of fabric impregnated with heat-setting resin and separated by an intermediate element or "core" usually consisting of a honeycomb aluminium sheet structure or numerous strips of fabric glued together and impregnated with heat-setting resin which is subsequently oven cured.

C) Vacuum-pressed sandwich panels consisting of two layers of glass fibre impregnated with polyester resin and separated by an intermediate element formed from rigid foam, usually having a PVC (polyvinyl chloride), PVR (polyurethane) or PS (polystyrene) base.

D) Box panels formed by glueing together pressed polyester resin and glass fibre based BMC or SMC parts.

E) Pressed monolithic panels formed from polyester resin and glass fibre based BMC or SMC.

F) Pressed monolithic panels formed from glass fibre and liquid polyester resin.

All the above panels present a number of drawbacks.

Type A) presents an extremely high specific weight in relation to its mechanical strength.

Type B), in addition to involving a painstaking, time-consuming manufacturing process unsuitable for mass production, presents a manufacturing cost acceptable only by the aircraft industry, by which panels of this type are in fact employed.

Type C) does not lend itself readily to the formation of complex shapes, due to the rigid intermediate separating element involved.

Types D) and E) are expensive to produce, due to the equipment involved, which must be capable of withstanding high forming pressures in the region of 120 Atm. What is more, they present a high specific weight and, at times, a poor surface finish.

Type F), in addition to involving a time-consuming manufacturing process requiring a good deal of craftsmanship, presents a high specific weight and, consequently, a poor strength/weight ratio.

The aim of the present invention is to provide a self-supporting composite element combining straightforward, low-cost production and good surface finish with an excellent strength/weight ratio. A further aim of the present invention is to provide a troublefree, fast process for manufacturing the said elements on an industrial scale. With these aims in view, according to the present invention, there is provided a load-bearing structural element, particularly for vehicle bodies, comprising a synthetic plastic resin matrix and a strengthener consisting of fibres immersed inside the said matrix and designed to absorb mechanical stress; characterised by the fact that the said fibre strengthener is divided into at least two substantially uniform layers arranged beneath respective opposite outer surfaces defining the said structural element; the said structural element comprising a permeable inner spacer element having a high void percentage and arranged between the said layers of fibres in such a manner as to separate the same as far as possible from each other; the said matrix being formed from polymeric foam, by which the said inner spacer element is fully permeated and inside which the said inner spacer element is immersed together with the said fibres, so as to form a monolithic whole.

According to the present invention, there is also provided a process for manufacturing load-bearing structural elements, particularly vehicle body panels, characterised by the fact that it comprises stages consisting in:

- arranging inside a first half mold a three-dimensional armature formed by combining: a first layer of vegetable, mineral or synthetic fibres of relatively long length in relation to the size of the said layer, and arranged in random, substantially two-dimensional manner, so that the said first layer is relatively thin as compared with its other dimensions; a three-dimensional intermediate element formed from flexible material and substantially equal in thickness to the element being produced, said three-dimensional element being placed on top of the said first fibre layer, and being highly permeable by virtue of most of its volume

2

consisting of a number of communicating voids; and a second layer of vegetable, mineral or synthetic fibres substantially identical to the said first layer and which is placed on top of the said three-dimensional element in such a manner as to be supported by the same and separated from the said first layer;
- pouring into the said first half mold a polymeric foam in the process of curing, to which reinforcing material may or may not be added, and which is produced by forming gas bubbles inside a mass of synthetic resin, particularly an unsaturated polyester resin; the said foam being poured in such a manner as to fill all the voids in the said armature and fully cover the same;
- placing over the said first half mold a second half mold having a conjugate surface, said mold being closed long enough for the said foam to set and so incorporate the said three-dimensional armature inside the resulting cured mass.

A non-limiting embodiment of the load-bearing element according to the present invention will be described with reference to the accompanying drawings, in which :

Fig.1 shows a purely schematic cross section of a panel formed according to the teachings of the present invention and housed inside a mold shown only partially, for the sake of simplicity;

Fig.2 shows a schematic cross section of the Fig.1 panel perpendicular to the Fig.1 plane;

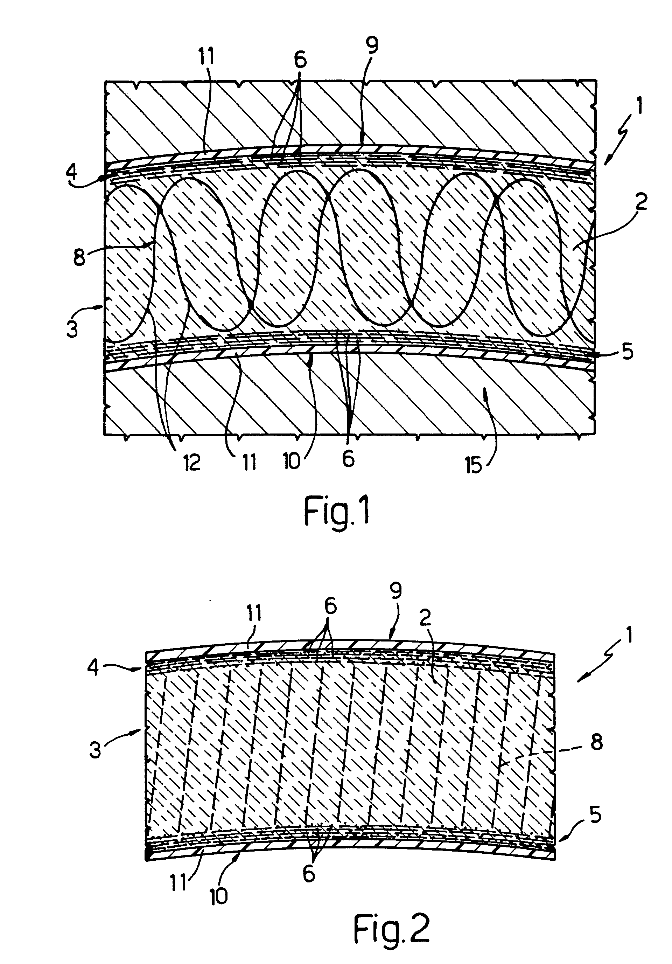

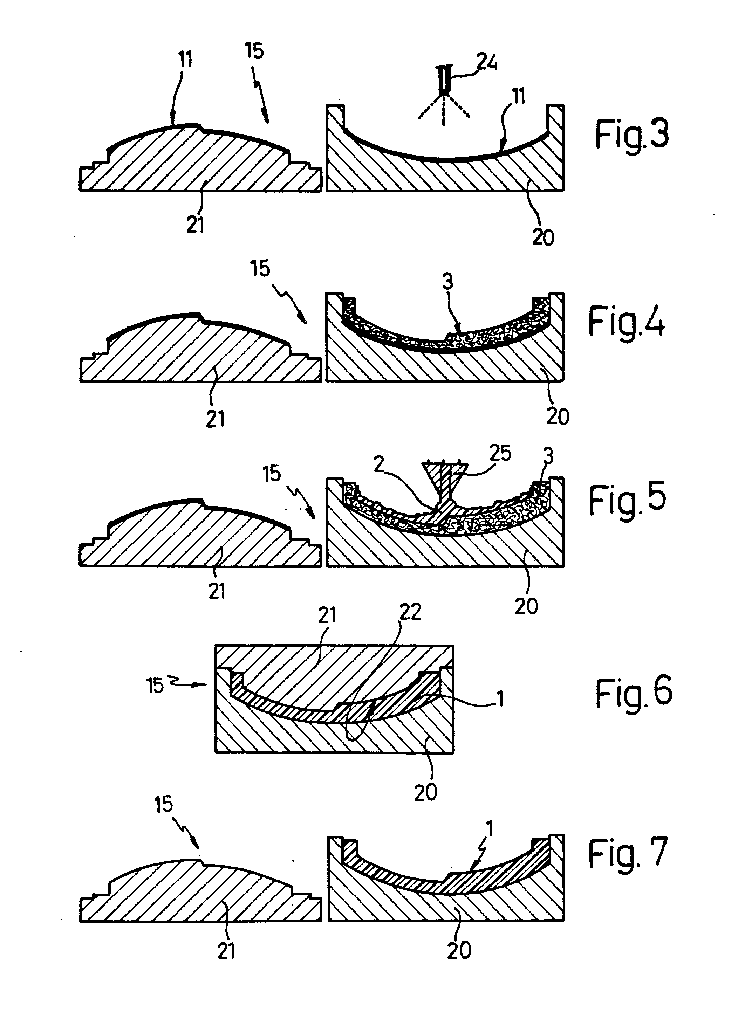

Fig.s 3 to 7 show schematic views of the various stages in the process for producing the Fig.1 and 2 panel.

Number 1 in Fig.s 1 and 2 indicates a composite self-supporting panel, which may be produced in any shape and is particularly suitable for use as a vehicle body panel. According to the present invention, the said panel or element 1 comprises a matrix formed from polymeric foam 2, preferably but not exclusively of the closed-cell type (the open-cell type nevertheless provides for the same efficiency), and a three dimensional inner armature 3 immersed inside foam 2 so as to form a monolithic whole with the same. Armature 3 consists of two layers, 4 and 5, of any type of fibre 6, e.g. vegetable, mineral or synthetic, which fibres 6 are relatively long as compared with the size of layers 4 and 5, and arranged in random, substantially two-dimensional manner so that the said layers 4 and 5 are relatively thin as compared with their other dimensions; and a permeable, flexible, three-dimensional intermediate element 8 preferably of a certain elasticity, having a high void percentage, and inserted between the said layers 4 and 5 so as to define a low-density separating element for separating the said layers 4 and 5 as far as possible and compatibly with the thickness of element 1. Layers 4 and 5 are substantially uniform and, according to the present invention, are arranged beneath respective opposite outer surfaces 9 and 10 defining element 1. The example shown being a panel, the said surfaces 9 and 10, which may be curved or flat, present plan dimensions far in excess of the distance separating them, which distance obviously equals the thickness of panel or element 1. According to the present invention, each of the said surfaces 9 and 10, or at least the visible surface on the structure formed using element 1, is preferably defined, not by the matrix resin, but by a respective surface finish layer 11 commonly known as "gel coat" and consisting of a compact synthetic resin coated over synthetic foam matrix 2.

Intermediate element 8 is placed on top of bottom layer 5 and, in turn, supports top layer 4 on the opposite side to layer 5. The fibres 6 of layers 4 and 5 are totally immersed inside matrix 2 and provide for absorbing mechanical stress by virtue of the position in which they are held by element 8. As all the voids inside element 8 are permeated by the solid foam constituting matrix 2, the said element 8 is also immersed inside matrix 2 together with fibres 6. According to the present invention, element 8 consists of a flexible, porous mattress, at least 90% of the volume of which consists of communicating voids.

According to the preferred embodiment shown, element 8 consists of a flexible ENKAMAT mattress (registered trade mark) formed from a number of monofilaments 12 of polyamide fibre, preferably POLIAMIDE 6, roughly woven in accordion fashion (as shown purely schematically in Fig.1 with no claim to realism) and heat sealed at the contact points. Though such an element is known and marketed in rolls which may be cut to size, it is generally employed in a different field of technology, for protecting grass-covered surfaces, slopes, banks and similar. In conjunction with the said element 8, layers 4 and 5 are also formed using glass fibre, preferably a "Unifilo" mat consisting of uncut monofilaments of glass E of relatively long length as compared with the size of layers 4 and 5 and held together by means of a styrene soluble plastic binder. The said mat is also a known material available on the market, the one employed in the preferred embodiment of the present invention being marketed under the name of UNIFILO (registered trade mark). In conjunction with the above materials, matrix 2 is surprisingly formed using any known type of polyester resin foamed by blowing into a mass of the said resin, in the process of curing, gas such as air, nitrogen and/or carbon dioxide. Preference is given, in particular, to unsaturated polyester resin foam produced by polycondensating glycols with organic dicarboxylic acids, at least one of which contains a double bond capable of reacting with vinyl monomers. Said condensation products (known commercially as alkyds) are dissolved in an appropriate allyl or vinyl monomer (usually styrene) and added with inhibitors.

3

Here and hereinafter, therefore, the term "unsaturated polyester resin" is intended to mean a solution of the said condensation products or alkyds and inhibitors in a vinyl or allyl monomer. Unsaturated polyester resins come and are marketed in liquid form. For solidifying and converting the said liquid resins into finished product form, they must be cured using peroxide catalysts, accelerators, and heat or other forms of energy (e.g. UV, EB, etc.).

Suitable unsaturated polyester resin foams are, for example, those marketed by the name of SNIAFOAM (registered trade mark) which may even be reinforced with minerals, glass fibre or microspheres. Tests have shown that, for the purpose of the present invention, mattress 8 may be formed from any material, other than polyamide fibres, providing it presents characteristics similar to those described, i.e. a void percentage of 90% or more (preferably 95%) of its total volume and a component fibre density of approximately 1-1.15 Kg per cubic decimetre, and providing it is not subject to destructive chemical or physical attack by polyester resins, monomers or isocyanates, and does not interfere with curing of the polyester resins. To any technician skilled in the art, therefore, it will be clear that element 8 may also be formed from rubber-coated coco fibres, and filter material fibres, particularly in the form of a woven mat (here and hereinafter intended to mean a structure of fibres interwoven in any manner). By way of an alternative to the glass fibre Unifilo mat, layers 4 and 5 ma also be formed from glass fibre fabric, woven glass or carbon fibre mats, or non-woven fabrics.

According to the present invention, armature 3 is formed from the above materials by placing inside a mold 15 (Fig.1) of any known type (and therefore not described in detail for the sake of simplicity) a given amount of glass fibre Unifilo mat to form layer 5; a length of ENKAMAT mattress (registered trade mark) cut to the size of the required panel 1 and, in particular, of substantially the same thickness as the same; and, finally, a further amount of Unifilo mat to form layer 4. As shown clearly in Fig.s 3 to 7, mold 15 is composed of a bottom mold 20 and a top mold 21 having respective conjugate surfaces, so as to define, when mold 15 is closed, i.e. when top mold 21 is placed on top of bottom mold 20 with their respective conjugate surfaces facing each other (Fig.6), an inner cavity 22 of exactly the same shape and size as panel 1 being produced. With top and bottom molds 21 and 20 open and placed side by side, the inner wall of mold 20 (and possibly also the respective conjugate surface of mold 21) is first coated with a layer of polyester resin based gel coat to which a catalyst is added, so as to produce one or both of layers 11. The said coating is preferably applied by spraying on the resin, during curing, by means of a nozzle 24 moved over the surfaces of top and bottom molds 21 and 20. Prior to spraying, the said surfaces are preferably treated with remover or a non-adhesive substance for enabling easy removal of the finished product. Armature 3 is then placed inside bottom mold 20, for which purpose it may either be preassembled separately and held together with appropriate means (ties, adhesives or similar) and placed enbloc inside bottom mold 20, or it may be built in loco by placing layer 5, porous spacer 8 and layer 4 on top of one another inside bottom mold 20. Finally, uncured, unsaturated polyester resin foam 2 is poured on top of armature 3 inside bottom mold 20, said foam 2 being produced separately on known equipment (not shown), fed pneumatically by pipes (not shown), and poured into bottom mold 20 by means of nozzle 25. Unsaturated polyester resin foam 2 is preferably produced using the process described in Italian Patent Application n.22578-A/79 filed on 11.05.79 by SNIA VISCOSA, in which case, Italian Patent Application n.22580-A/79 also filed on 11.05.79 by SNIA VISCOSA also applies. The content of both the above patents are herein incorporated as required for reference purposes only. In any case, foam 2 is produced by adding gas (air, nitrogen or carbon dioxide) to a liquid mass of unsaturated polyester resin, which is immediately mixed with a catalyst for curing and solidifying the said mass via three-dimensional reticulation. The said liquid mass may also be reinforced with the aforementioned minerals, glass fibre or micropheres.

The process according to the present invention will now be described by way of a number of non-limiting examples.

## EXAMPLE 1

A steel tank was filled with 100 Kg of polyester resin prepared in a reactor in the normal manner, by combining the following components:
propylene glycol 0.8 moles; diethylene glycol 0.2 moles; maleic anhydride 0.6 moles; phthalic anhydride 0.4 moles; hydroquinone 100 ppm; styrene 30% of the total. To the above resin was added 500 ml of 6% cobalt octoate and xylene solution, 1 Kg of silicone oil, and 5 Kg of 1 mm long milled glass fibres.

This was then mixed by means of a propeller mixed for 20 minutes, and transferred, with the aid of a 200 l/h gear pump, into a 35°C temperature controlled turbine consisting of a stator and a rotor having a round-section projection and operating at a speed of 230 m/min. The foaming gas (air) was injected into the turbine through a nozzle. Prior to leaving the turbine, the foam was injected with a catalyst of methyl ethyl ketone peroxide at a rate of 2 l/h.

The liquid foam so formed presented a density of 0.45 Kg/l.

## EXAMPLE 2

A steel mold was prepared having male and female elements in the form of a 500x500x5 mm flat sheet. After heating the entire mold to 80°C, the bottom mold was sprayed with a ~0.5 mm thick layer of SNIAGEL 607 0011/A polyester gel coat having a Brookfield HTB viscosity at 25°C H2 and 10 RPM of 5400 cps, and activated with methyl ethyl ketone peroxide. After about 11 minutes, and after making sure the said gel coat layer was fully cured, a first sheet of 0.4 mm thick, 350 gr/m3 glass fibre Unifilo mat was placed on top of the said layer. A length of 5 mm thick ENKAMAT mattress cut to size was then placed on top of the said first sheet of Unifilo mat and, finally, a second sheet of Unifilo mat was placed on top of the said ENKAMAT mattress. 350 gr of foam prepared and catalyzed as in Example 1 was then poured on top of the resulting structure, taking care to fill all the voids inside the mold, including those inside the structure consisting of the two Unifilo mat sheets and the ENKAMAT mattress, and so fully permeate the same and also cover the said second Unifilo mat sheet. The mold was then closed to a pressure of 2 Kg/cm2 for 10 minutes, after which, it was opened and the finished panel removed, said panel consisting of a composite structure consisting of a 500x500x5 mm sheet of cured, solidified, closed-cell foam incorporating the said two sheets of Unifilo mat and the separating mattress on the inside, and the gel coat layer on the outside. The separating mattress was reduced to a thickness of approximately 3.8 mm. When tested, the said sheet presented a density of 0.72 Kg/m3, a weight of 2.91 Kg/m2, and a tensile strength of 500 Kg/cm2. The said sheet also presented, to the naked eye, a satisfactory surface finish on the gel coated side.

## EXAMPLE 3

A number of flat panels were prepared as in Examples 1 and 2, but varying one of the aforementioned parameters for each, in particular, the armature materials and the type of gas, or substituting the gas with a chemical foaming agent. The results were as shown in Table 1.

### TABLE 1

| Sample n. | Foam.Ag. | Armature Material | Final Wt |
|---|---|---|---|
| 1 | CO2 | Glass fibre mat | 2.90 kg/m2 |
|  |  | ENKAMAT mattress |  |
| 2 | N2 | " | 2.91 " |
|  |  | " |  |
| 3 | Freon + Isocyanate | " | 2.92 " |

| Sample n. | Foam.Ag. | Armature Material | Final Wt |
|---|---|---|---|
| 4 | Freon + methylene chloride | " | 2.90 " |
| 5 | N2 | Woven glass mat ENKAMAT mattress | 3.00 " |
| 6 | Air | Non-woven fabric ENKAMAT mattress | 3.09 " |
| 7 | CO2 | Glass fibre mat Woven coco+rubber fibre mat | 3.31 " |

## Claims

1) - A load-bearing structural element (1), particularly for vehicle bodies, comprising a synthetic plastic resin matrix and a strengthener consisting of fibres immersed inside the said matrix and designed to absorb mechanical stress; characterised by the fact that the said fibre (6) strengthener is divided into at least two substantially uniform layers (4, 5) arranged beneath respective opposite outer surfaces (9, 10) defining the said structural element (1); the said structural element (1) comprising a permeable inner spacer element (8) having a high void percentage and arranged between the said layers (4, 5) of fibres (6) in such a manner as to separate the same as far as possible from each other; the said matrix being formed from polymeric foam (2), by which the said inner spacer element (8) is fully permeated and inside which the said inner spacer element (8) is immersed together with the said fibres (6), so as to form a monolithic whole.

2) - A structural element (1) as claimed in Claim 1, characterised by the fact that the said fibres (6) are vegetable, mineral or synthetic.

3) - A structural element (1) as claimed in Claim 2, characterised by the fact that the said strengthener of fibres (6) is formed from glass fibre Unifilo mat, glass fibre fabric, woven glass fibre mat, or non-woven glass fibre fabric.

4) - A structural element (1) as claimed in any one of the foregoing Claims from 1 to 3, characterised by the fact that the said spacer element (8) consists of a flexible mattress formed from monofilaments of polyamide fibre heat sealed at the points of contact, rubber-coated coco fibres, or filter material fibres.

5) - A structural element (1) as claimed in Claim 4, characterised by the fact that the said spacer element (8) consists of a flexible mattress marketed by the name of ENKAMAT.

6) - A structural element (1) as claimed in any one of the foregoing Claims from 1 to 5, characterised by the fact that the said matrix is formed from the said heat-setting unsaturated polyester based polymeric foam.

7) - A structural element (1) as claimed in any one of the foregoing Claims from 1 to 6, characterised by the fact that the said outer surfaces (9, 10) present plan dimensions far in excess of the distance separating them; at least one of the said surfaces (9, 10) being defined by a layer of compact synthetic resin (11) over the said polymeric foam matrix (2).

8) - A structural element (1) as claimed in Claim 7, characterised by the fact that the said compact resin forming the said outer surface (9, 10) consists of a polyester based gel coat.

9) - A process for manufacturing load-bearing structural elements, particularly vehicle body panels, characterised by the fact that it comprises stages consisting in:
- arranging inside a first half mold (20) a three-dimensional armature (3) formed by combining: a first layer

6

(5) of vegetable, mineral or synthetic fibres (6) of relatively long length in relation to the size of the said layer, and arranged in random, substantially two-dimensional manner, so that the said first layer (5) is relatively thin as compared with its other dimensions; a three-dimensional intermediate element (8) formed from flexible material and substantially equal in thickness to the element being produced, said three-dimensional element (8) being placed on top of the said first fibre layer (5), and being highly permeable by virtue of most of its volume consisting of a number of communicating voids; and a second layer (4) of vegetable, mineral or synthetic fibres (6) substantially identical to the said first layer (5) and which is placed on top of the said three-dimensional element (8) in such a manner as to be supported by the same and separated from the said first layer;

- pouring into the said first half mold (20) a polymeric foam (2) in the process of curing, to which reinforcing material may or may not be added, and which is produced by forming gas bubbles inside a mass of synthetic resin, particularly an unsaturated polyester resin; the said foam (2) being poured in such a manner as to fill all the voids in the said armature (3) and fully cover the same;

- placing over the said first half mold (20) a second half mold (21) having a conjugate surface, said mold being closed long enough for the said foam (2) to set and so incorporate the said three-dimensional armature (3) inside the resulting cured mass.

10) - A process as claimed in Claim 9, characterised by the fact that the said three-dimensional armature (3) is formed by inserting, between the said two layers (4, 5) of vegetable, mineral or synthetic fibres, a flexible mattress (8) formed in such a manner that at least 90% of its total volume consists of communicating voids; the said mattress (8) being formed from one of a group of materials consisting of: monofilaments of polyamide fibre heat sealed at the contacting points of the same; rubber-coated coco fibres; and filter material fibres.

11) - A process as claimed in Claim 10, characterised by the fact that the said three-dimensional armature (3) is formed by inserting, between the said two layers (4, 5) of vegetable, mineral or synthetic fibres, a flexible ENKAMAT mattress (8).

12) - A process as claimed in one of the foregoing Claims from 9 to 11, characterised by the fact that the said first and second fibre layers (4, 5) are formed from one of a group of materials consisting of : glass fibre Unifilo mat; glass fibre fabrics; woven glass fibre mats; non-woven fabrics. ·

13) - A process as claimed in one of the foregoing Claims from 9 to 12, characterised by the fact that, on the opposite side to that contacting the said three-dimensional intermediate element (8), at least one of the said first and second layers (4, 5) of vegetable, mineral or synthetic fibres is placed in contact with a relatively thin layer (11) of polyester resin based gel coat sprayed beforehand on to at least one of the said half molds (20, 21) for forming at least one external surface of the said structural element.

14) - A process as claimed in one of the foregoing Claims from 9 to 13, characterised by the fact that the said polymeric foam (2) is produced by blowing air, nitrogen or carbon dioxide into a liquid mass of unsaturated polyester resin optionally containing mineral additives, glass fibre or microspheres.

15) - A process as claimed in one of the foregoing Claims from 9 to 13, characterised by the fact that the said polymeric foam (2) is produced by introducing a chemical foaming agent, consisting of isocyanates, methylene chloride or freon, into a liquid mass of unsaturated polyester resin optionally containing mineral additives glass fibre or microspheres.

Fig.1

Fig.2

Fig.3

Fig.4

Fig.5

Fig.6

Fig.7